(19) Europäisches Patentamt / European Patent Office / Office européen des brevets

(11) **EP 2 763 876 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(51) Int Cl.:
***B60T 8/172*** *(2006.01)*       ***B60T 8/1755*** *(2006.01)*

(21) Anmeldenummer: **12743997.4**

(86) Internationale Anmeldenummer:
**PCT/EP2012/065611**

(22) Anmeldetag: **09.08.2012**

(87) Internationale Veröffentlichungsnummer:
**WO 2013/050195 (11.04.2013 Gazette 2013/15)**

(54) **VERFAHREN ZUR BESTIMMUNG EINES MODELL-VORDRUCKS MITTELS EINES MATHEMATISCHEN MODELLS IN EINEM ELEKTRONISCH GEREGELTEN KRAFTFAHRZEUGBREMSSYSTEM**

METHOD FOR DETERMINING A MODEL UPSTREAM PRESSURE BY MEANS OF A MATHEMATICAL MODEL IN AN ELECTRONICALLY REGULATED MOTOR VEHICLE BRAKE SYSTEM

PROCÉDÉ DE DÉTERMINATION D'UNE PRESSION D'ALIMENTATION MODÈLE AU MOYEN D'UN MODÈLE MATHÉMATIQUE DANS UN SYSTÈME DE FREINAGE DE VÉHICULE AUTOMOBILE À RÉGULATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2011 DE 102011084069**

(43) Veröffentlichungstag der Anmeldung:
**13.08.2014 Patentblatt 2014/33**

(73) Patentinhaber: **Continental Teves AG & Co. oHG 60488 Frankfurt (DE)**

(72) Erfinder:
• **STEIN, Michael**
  **65510 Idstein (DE)**
• **ZIMMERMANN, Jochen**
  **56357 Oberwallmenach (DE)**
• **BURKHARD, Dieter**
  **55411 Bingen-Büdesheim (DE)**
• **BORNEIS, Joachim**
  **64287 Darmstadt (DE)**

(56) Entgegenhaltungen:
**WO-A1-99/26819     DE-A1-102006 022 701**

**Beschreibung**

Die Erfindung betrifft ein Verfahren zur Bestimmung eines Modell-Vordrucks mittels eines mathematischen Modells in einem elektronisch geregelten Kraftfahrzeugbremssystem gemäß Oberbegriff des Anspruchs 1.

Elektronische Kraftfahrzeugbremssysteme umfassen neben der Grundfunktion ABS je nach Ausstattungsvariante häufig noch weitere Funktionen, wie Antriebsschlupfregelung (ASR), Fahrstabilitätsregelung (ESP), Abstandsregelung (ACC) etc., welche zum Teil Unterfunktionen des ABS-Regelsystems nutzen.

Von diesen Kraftfahrzeugbremssysteme sind verschieden aufwändige Varianten auf dem Markt; dabei sind im Zusammenhang mit der vorliegenden Erfindung solche Bremssysteme zu nennen, welche ohne Drucksensoren die durchzuführende Bremsregelaufgabe bewerkstelligen können. Praktisch alle für die Bremsregelung benötigten internen Rechengrößen werden auf Grundlage der an das Bremssystem angeschlossenen Raddrehzahlsensoren gewonnen. So ist insbesondere bei diesen Steuergeräten, von denen die Erfindung ausgeht, auch kein Drucksensor für den Fahrervordruck, also der THZ-Druck vorhanden, wie er bei ESP-Steuergeräten üblich ist.

Für Bremsanlagen ohne THZ-Drucksensor werden der Vordruck (THZ-Druck) und der Rad-Druck mit einem Modell berechnet, wobei deren Differenz den für die Einlassventil-Ansteuerung relevanten Differenzdruck darstellt.

So ist es aus der WO 2005/007475 A1 bekannt, den Vordruck (THZ-Druck) über das Auslaufverhalten der im PWM-Betrieb betriebenen ABS-Rückförderpumpe zu bestimmen, indem die während der Ausschaltphase detektierte generatorische Spannung als Maßstab für den Vordruck herangezogen wird.

Der Rad-Druck kann iterativ, ausgehend von einem Startwert zum Zeitpunkt des Eintritts einer Bremsregelung über ein Modell berechnet werden, welches als Eingangsgrößen den modellierten THZ-Druck, den modellierten Raddruck aus einem vorherigen Rechenschritt (aus der letzten Loop) und Ventilschaltzeiten eines Ein- und Auslassventils des entsprechenden Rades verwendet.

Bis zum Zeitpunkt des Eintritts in eine Bremsregelung sind die zugehörigen Einlassventile im stromlosen, also geöffneten Zustand, so dass der Druck im Rad dem Vordruck, also dem Druck im THZ (Tandemhauptzylinder) im Wesentlichen entspricht. Da zu diesem Zeitpunkt die ABS-Rückförderpumpe noch keine Spannungsinformation liefert, kann der Startwert für THZ- und Rad-Druck unter Auswertung der Fahrzeugverzögerung und der Zeitdauer zwischen einer Bremspedal-Betätigung und dem Eintritt in die Bremsregelung bestimmt werden.

Hierzu wird auf die DE 10 2006 056 673 A1 verwiesen, die ein Bremsenregelungsverfahren für ein Kraftfahrzeugbremssystem beschreibt, welches das Signal eines Vordrucksensors während einer Antiblockierregelung zumindest für die Berechnung des aktuellen Raddrucks verwendet wird und bei einem Ausfall des Vordrucksensors oder bei einem fehlerhaften Vordrucksensor ein Ersatzvordrucksignal aus einer im Bremssystem gespeicherten, fahrzeugspezifischen Bremsdruck-Verzögerungskennlinie bildet, wobei sowohl für die Hinterachse als auch für die Vorderachse eine spezielle Bremsdruck-Verzögerungskennlinie vorgesehen ist.

Dieses bekannte Bremsenregelungsverfahren modelliert den Vordruck derart, dass der aus der Fahrzeugverzögerung mittels der Bremsdruck-Verzögerungskennlinie bestimmte Wert mit einem Sicherheitsoffset oder einem Sicherheitsfaktor beaufschlagt wird, um zu vermeiden, dass der Vordruck durch die Steuerung unterschätzt wird, wodurch sich sonst zu lange Ventilöffnungszeiten ergeben würden. Ferner wird vorgeschlagen, den Druck aus der Druck-Verzögerungskennlinie mit einem Faktor oder einem Offset zu erhöhen, wenn das Bremspedal durch den Fahrer sehr schnell gedrückt wird (sog. harter Antritt), da es ansonsten auf Grund von Totzeiten bei der Verzögerungssignalbildung und innerhalb der Hydraulik zu Differenzen zwischen tatsächlicher Fahrzeugverzögerung und dem entsprechenden Verzögerungssignal kommt. Die Fahrzeugverzögerung wird aus den Signalen von Rad-Drehzahlsensoren berechnet.

Jedoch führt dieses bekannte Verfahren, insbesondere bei einer hohen Antrittsgeschwindigkeit des Bremspedals, also bei einem sog. harten Pedalantritt nicht immer zu einem befriedigenden Ergebnis hinsichtlich des Modell-Vordrucks, da zum Zeitpunkt des Beginns der Bremsregelung die Fahrzeugverzögerung nicht mit ausreichender Güte berechnet werden kann.

Weiterhin ist aus DE 102006022701 A1 ein Verfahren zur Modellierung eines Vordruckes für ein Kraftfahrzeugbremssystem bekannt, bei dem mit Beginn einer Fahrzeugverzögerung ein Zähler gestartet wird, der mit einem vorgegebenen Wert G inkrementiert wird und zurückgesetzt wird, wenn die Fahrzeuggeschwindigkeit zunimmt. Mit Regelungsbeginn wird aus dem Zählerstand durch Multiplikation mit einem fahrzeugspezifischen und achsindividuellen Parameter der Vordruck berechnet, der als Startwert für die Bremsregelung dient. Der als Anstiegsgradient dienender Wert G modelliert den THZ-Anstiegsgradient für den Vordruck und wird bei Erreichen von vorgegebenen Zählerwerten mittels eines Verringerungsfaktors reduziert, wodurch eine Abflachung des modellierten Druckanstiegsgradienten bewirkt wird. Mit dem Startwert für den Vordruck wird für die Bremsregelung mittels eines weiteren Modells ein Modell-Raddruck für die Regelung bestimmt, welches bspw. aus der WO97/27090 bekannt ist.

Dieses bekannte Verfahren gemäß der WO97/27090 zur Bestimmung des Modell-Vordrucks basiert auf einer Berechnung des Blockierdruckniveaus zu Beginn einer Bremsregelung auf der Grundlage der Fahrzeugverzögerung, welche aus den Radgeschwindigkeitssignalen bestimmt wird.

Die Aufgabe der Erfindung besteht darin, ein eingangs genanntes Verfahren anzugeben, mit welchem ein Modell-Vordruck mit hoher Zuverlässigkeit und hoher Robustheit gegenüber störenden Einflüssen bestimmt werden kann.

Diese Aufgabe wird gelöst durch ein Verfahren mit den Merkmalen des Patentanspruchs 1.

Ein solches Verfahren zur Bestimmung eines Modell-Vordrucks mittels eines mathematischen Modells in einem elektronisch geregelten Kraftfahrzeugbremssystem, bei dem mittels des Modell-Vordrucks als wenigstens ein Parameter eine Regelung eines einen Bremsdruckaufbau an wenigstens einer Radbremse bewirkenden, elektrisch steuerbaren Hydraulikventils durchgeführt wird und Radsensoren zur Ermittlung eines die Fahrzeuggeschwindigkeit anzeigenden Fahrzeuggeschwindigkeitssignals sowie ein betätigbares Bremspedal vorgesehen sind, zeichnet sich erfindungsgemäß dadurch aus, dass aus dem Fahrzeuggeschwindigkeitssignal wenigstens ein erstes tiefpassgefiltertes Fahrzeuggeschwindigkeitssignal mittels eines Tiefpassfilters mit einer ersten Grenzfrequenz erzeugt wird, aus dessen zeitlichen Verlauf der Zeitpunkt einer signifikanten Abnahme detektiert wird, der als Startkriterium zur Bestimmung einer mit einer durch einen Bremsvorgang initiierten Fahrzeugverzögerung beginnenden Zeitdauer (Timer) dient, welche mit dem Zeitpunkt der einsetzenden Regelung des Bremsvorganges endet, zur Klassifizierung der Antrittsgeschwindigkeit des Bremspedals die Zeitdauer mit wenigstens einem ersten oder zweiten Schwellwert verglichen wird, und in Abhängigkeit des Vergleichsergebnisses mittels des mathematischen Modells ein Modell-Vordruck bestimmt wird.

Mit diesem erfindungsgemäßen Verfahren, welches zur Erkennung des Zeitpunktes des Verzögerungsbeginns des Fahrzeugs ein tiefpassgefiltertes Fahrzeuggeschwindigkeitssignal auswertet und damit die Zeitdauer bis zum Beginn der Bremsregelung bestimmbar macht, kann mit hoher Genauigkeit auf die Antrittsgeschwindigkeit des Bremspedals geschlossen werden, welche den THZ-Druckgradienten und damit den Vordruck bestimmt. Die Tiefpassfilterung der Größe "Fahrzeuggeschwindigkeit" führt als deren Integration zu einem wegproportionalen Signal, welches einen charakteristischen und ausgeprägten "Knick", also einen abnehmenden Verlauf im Zeitpunkt des Beginns der Fahrzeugverzögerung zeigt, welcher umso deutlicher ausgeprägt ist, je höher die Antrittsgeschwindigkeit des Bremspedals ist, also insbesondere bei einem "harten Antritt". Hierbei wird insbesondere ausgenutzt, dass bei einer Integration mittels eines digitalen Tiefpassfilters mit niedriger Grenzfrequenz mit abnehmender Signalamplitude auch der Integralwert abnimmt.

Der wesentliche Vorteil liegt ferner darin, dass der Zeitpunkt der beginnenden Einbremsung unabhängig von bspw. einem Bremslichtschalter (BLS)-Signal erkannt wird, wodurch die Robustheit des Verfahrens zur THZ- und Rad-Druckschätzung wegen fehlenden verfälschenden Einflüssen eines Bremslichtschalters, wie Einbauposition, Klemmen, Auslösegeschwindigkeit fehlen und zu einer hohen Genauigkeit der THZ- und Rad-Druckschätzung führen.

In einer besonders vorteilhaften Ausgestaltung der Erfindung wird wenigstens ein zweites tiefpassgefiltertes Fahrzeuggeschwindigkeitssignal mittels eines Tiefpasses mit einer gegenüber der ersten Grenzfrequenz kleineren Grenzfrequenz erzeugt, und zur Bestimmung des als Startkriterium dienenden Zeitpunktes zur Berechnung der Zeitdauer ein erster Zähler in Abhängigkeit der Differenz aus dem ersten und zweiten tiefpassgefilterten Fahrzeuggeschwindigkeitssignal gesteuert.

Da mit dem ersten tiefpassgefiltertes Fahrzeuggeschwindigkeitssignal wegen der gegenüber dem zweiten tiefpassgefiltertes Fahrzeuggeschwindigkeitssignal höheren, insbesondere wesentlich höheren Grenzfrequenz langsame Änderungen erkennbar werden, können mit der Bildung der Differenz aus dem ersten und zweiten tiefpassgefiltertes Fahrzeuggeschwindigkeitssignal ein Offset-Drift im Wesentlichen eliminiert werden. Mit einer niedrigen Grenzfrequenz des zweiten tiefpassgefiltertes Fahrzeuggeschwindigkeitssignals lässt sich sicher eine hohe Antrittsgeschwindigkeit des Bremspedals, also ein starker Antritt detektieren.

Mit einer gegenüber der Grenzfrequenz des zweiten tiefpassgefiltertes Fahrzeuggeschwindigkeitssignal weiter reduzierten Grenzfrequenz wird weiterbildungsgemäß ein drittes tiefpassgefiltertes Fahrzeuggeschwindigkeitssignal erzeugt, mit dem eine niedrige Antrittsgeschwindigkeit, also ein leichter Antritt des Bremspedals detektiert wird, und zur Bestimmung des als Startkriterium dienenden Zeitpunktes zur Berechnung der Zeitdauer ein zweiter Zähler in Abhängigkeit der Differenz aus dem ersten und dritten tiefpassgefilterten Fahrzeuggeschwindigkeitssignal gesteuert wird. Auch hier wird aufgrund der Differenzbildung mit dem ersten tiefpassgefiltertes Fahrzeuggeschwindigkeitssignal ein Offset-Drift korrigiert.

In einer weiteren Ausgestaltung der Erfindung wird der erste bzw. zweite Zähler bei einem Überschreiten der Differenz aus dem ersten und zweiten bzw. ersten und dritten tiefpassgefilterten Fahrzeuggeschwindigkeitssignal eines ersten Schwellwertes hoch gezählt und bei Unterschreiten eines zweiten Schwellwertes zurückgesetzt, wobei vorzugsweise mit dem Regelungsbeginn des Bremsvorganges der Zählerstand des ersten oder zweiten Zählers als Zeitdauer verwendet wird, dessen Wert den höchsten Zählerstand aufweist. Die derart bestimmte Zeitdauer beginnend mit der Fahrzeugverzögerung bis zum Beginn der Bremsregelung bildet mit hoher Genauigkeit den THZ-Gradienten nach, so dass auf der Basis dieser Zeitdauer eine ebenso genauer Modell-Vordruck bestimmt werden kann.

Die Zuverlässigkeit der Bestimmung des Modell-Vordrucks bzw. der sicheren Erkennung der Antrittsgeschwindigkeit des Bremspedals kann verbessert werden, wenn gemäß einer Ausgestaltung der Erfindung aus den Signalen der Raddrehzahlsensoren die Fahrzeugverzögerung ermittelt und mit einem oberen Schwellwert und einem unteren Schwellwert verglichen wird und ein dritter Zähler vorgesehen ist, welcher inkrementiert wird, wenn die Fahrzeugverzögerung größer als der obere Schwellwert ist und zurückgesetzt wird, wenn die Fahrzeugverzögerung kleiner als der untere Schwellwert ist. Vorzugsweise wird die Variable aus den Zählerständen dieser drei Zähler derart ermittelt, indem mit dem Regelungsbeginn des Bremsvorganges zwei Zählerstände mit den niedrigsten Werten aus den von dem ersten, zweiten und dritten Zähler erreichten Zählerständen ausgewählt werden und der Mittelwert der Zählerstände dieser beiden Zähler den Wert der Variablen Timer darstellt.

Besonders vorteilhaft kann als mathematisches Modell zur Bestimmung des Modell-Vordrucks eine im Bremssystem gespeicherte, fahrzeugspezifische Bremsdruck-Verzögerungskennlinie verwendet werden.

Hieraus wird weiterbildungsgemäß der Modell-Vordruck aus der Verzögerung des Kraftfahrzeugs und der Bremsdruck-Verzögeungskennlinie bestimmt, wenn die Zeitdauer wenigstens den Wert des ersten Schwellwertes aufweist. Im anderen Fall wird eine Reibwertschätzung durchgeführt und bei Erkennung einer Hochreibwertfahrbahn mit einem vorgegebenen Verzögerungswert, der vorzugsweise 1g beträgt, ein Modell-Vordruck mittels der Bremsdruck-Verzögerungskennlinie bestimmt.

Eine alternative Bestimmung des Modell-Vordrucks ergibt sich gemäß einer Weiterbildung der Erfindung dadurch, dass dieser aus der Verzögerung des Kraftfahrzeugs und der Bremsdruck-Verzögerungskennlinie bestimmt wird, wenn der Zählwert des ersten Zählers größer oder gleich einem ersten Schwellwert und der Zählwert des zweiten Zählers größer oder gleich einem weiteren ersten Schwellwert ist. Im anderen Fall wird auch hier eine Reibwertschätzung durchgeführt und bei Erkennung einer Hochreibwertfahrbahn mit einem vorgegebenen Verzögerungswert ein Modell-Vordruck mittels der Bremsdruck-Verzögerungskennlinie mit einem vorgegebenen Verzögerungswert, der vorzugsweise 1g beträgt, bestimmt. Da die Druck-Verzögerungs-Kennlinie den Zusammenhang zwischen Blockierdruck und Fahrzeugverzögerung im eingeschwungenen Zustand während der Regelung darstellt, kann ein Faktor k (üblicherweise 1 bis 1,3) berücksichtigt werden, mit welchem der aus der Kennlinie ermittelte Druck multipliziert wird, um eine Drucküberhöhung zu Beginn der Regelung zu berücksichtigen.

In einer Ausgestaltung der Erfindung ist als weiteres mathematisches Modell zur Bestimmung des Modell-Vordrucks eine im Bremssystem gespeicherte, fahrzeugspezifische THZ-Druckgradient-Reibwertkennlinie vorgesehen, wobei der Modell-Vordruck als Produkt aus dem mittels eines Reibwertes und der THZ-Druckgradient-Reibwertkennlinie bestimmten THZ-Druckgradient (Grad) und dem Wert der Zeitdauer berechnet wird, falls kein Hochreibwert vorliegt und der Wert der Zeitdauer kleiner als ein zweiter Schwellwert ist.

Falls jedoch der Wert der Zeitdauer den zweiten Schwellwert erreicht und kleiner als der erste Schwellwert ist und gleichfalls kein Hochreibwert vorliegt, wird mittels dieses weiteren Modells der Modell-Vordruck als Schätzfunktion in Abhängigkeit des aus dem mittels eines Reibwertes und der THZ-Druckgradient-Reibwertkennlinie bestimmten THZ-Druckgradienten (Grad), des Wertes der Zeitdauer und des mittels der Verzögerung des Kraftfahrzeugs und der Bremsdruck-Verzögerungskennlinie ermittelten Wertes bestimmt.

Vorzugsweise wird zur Erzeugung des ersten, zweiten und dritten tiefpassgefilterten Fahrzeuggeschwindigkeitssignals ein Tiefpass, vorzugsweise ein Tiefpass 1. Ordnung verwendet, welches einfach zu realisieren ist.

Im Folgenden wird das erfindungsgemäße Verfahren unter Bezugnahme auf die beigefügten Figuren näher erläutert und beschrieben werden. Es zeigen:

Figur 1    ein schematisches Blockschaltbild eines elektronisch geregelten Kraftfahrzeugbremssystem zur Durchführung des erfindungsgemäßen Verfahrens,

Figur 2    ein schematisches Ablaufdiagramm zur Bestimmung der Zeitdauer Timer gemäß einem Ausführungsbeispiel der Erfindung,

Figur 3    ein schematisches Ablaufdiagramm zur Bestimmung der Zeitdauer Timer gemäß einem weiteren Ausführungsbeispiel der Erfindung,

Figur 4    ein zeitliches Verlaufsdiagramm der für die Zeitdauer Timer gemäß Figur 2 erforderlichen Größen, und

Figur 5    ein schematisches Ablaufdiagramm zur Bestimmung des Modell-Vordrucks aus der Zeitdauer Timer gemäß einem Ausführungsbeispiel der Erfindung, und

Figur 6    ein schematisches Ablaufdiagramm zur Bestimmung des Modell-Vordrucks aus der Zeitdauer Timer gemäß einem weiteren Ausführungsbeispiel der Erfindung.

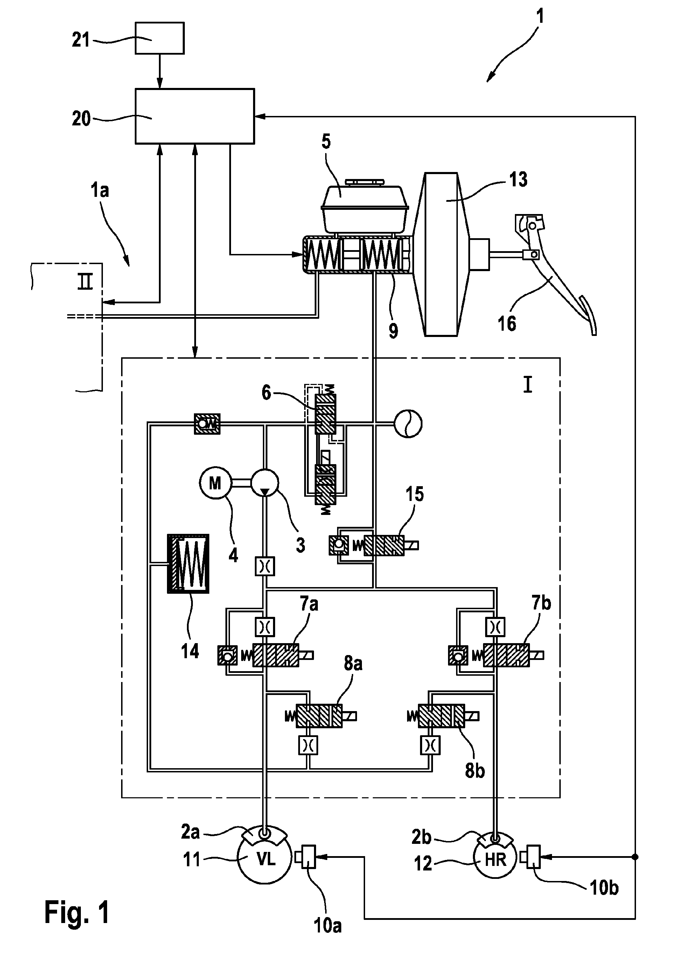

Die Figur 1 zeigt ein elektronisch geregeltes Kraftfahrzeugbremssystem 1 mit einer Bremsanlage 1a eines Kraftfahrzeugs mit einem Steuergerät 20 eines Fahrdynamikregelungssystems (ESC-System), dem Sensordaten eines ESC-Sensors 21 zugeführt werden.

Das Steuergerät 20 steuert die Bremsanlage 1a, wobei die Figur 1 nur einen an einen Bremszylinder (Tandem-Hauptzylinder) 9 angeschlossenen Bremskreis I für ein vorderes linkes Rad 11 und ein hinteres rechtes Rad 12 zeigt; ein zweiter Bremskreis II ist entsprechend aufgebaut und ebenfalls an den Bremszylinder 9 angeschlossen und nur andeutungsweise dargestellt. An den Bremskreis I sind Radbremsen 2a bzw. 2b der Räder 11 und 12 jeweils über eine Hydraulikleitung angeschlossen.

Die Bremsanlage 1 weist einen mit dem Bremszylinder 9 verbundenen Bremskraftverstärker 13 und einen Vorratsbehälter 5 für die Bremsflüssigkeit bzw. die Hydraulikflüssigkeit auf. Der Bremszylinder 9 erzeugt auslassseitig einen Bremsdruck P als Vordruck entsprechend eines mit dem Bremskraftverstärker 13 verbundenen Bremspedals 16, das von einem Fahrer betätigt wird. Dieser Vordruck wird über ein geöffnetes Trennventil 15 jeweils einem offenen Einlassventil 7a bzw. 7b einlassseitig zugeführt, damit sich ein entsprechender hydraulischer Bremsdruck an den Radbremsen 2a und 2b der Räder 11 und 12 aufbauen kann. Die beiden Einlassventile 7a und 7b sind stromlos offen. Der Bremskraftverstärker 13 mit dem Hauptbremszylinder 9 ist mit dem Steuergerät 20 verbunden.

Ein stromlos geschlossenes Auslassventil 8a bzw. 8b verbindet die Radbremsen 2a bzw. 2b mit einem Niederdruckspeicher 14, der seinerseits mit einer Hydraulikpumpe 3 ansaugseitig verbunden ist und über ein Umschaltventil 6 mit dem Hauptbremszylinder 9 verbunden werden kann.

Die Hydraulikpumpe 3 ist für die Radbremsen 2a und 2b vorgesehen, um bspw. im Falle eines ABS- oder ESC-Eingriffs das bei einem Druckabbau in den Niederdruckspeicher 14 verschobene Bremsmedium wieder heraus zu fördern.

Die Hydraulikpumpe 3 wird durch einen Elektromotor 4 angetrieben, der seinerseits von dem Steuergerät 20 pulsweitenmoduliert (PWM) angesteuert wird. Dabei wird der Elektromotor 4 derart angesteuert, dass die Hydraulikpumpe 3 durch ansaugseitiges Ansaugen von Bremsflüssigkeit einen Bremsdruck auf der Hochdruckseite aufbauen kann.

Damit bei der Ansteuerung der Hydraulikpumpe 3 im Schrittmotorbetrieb Bremsflüssigkeit aus der Druckkammer des Bremssattels 2a bzw. 2b abgesaugt werden kann, ist das Umschaltventil 6 und das Einlassventil 7a bzw. 7b geschlossen, während das Auslassventil 8a bzw. 8b zur Herstellung der Verbindung zur Druckkammer geöffnet ist.

Zur Erfassung des Drehverhaltens der Räder 11 und 12 sind jeweils Drehzahlsensoren 10a und 10b vorhanden, die ihre Sensorsignale dem Steuergerät 20 zur Auswertung zuführen, insbesondere um hieraus ein Fahrzeuggeschwindigkeitssignal $v_{ref}$ zu bestimmen.

Schließlich sind in diesem elektronisch geregelten Kraftfahrzeugbremssystem 1 keine Drucksensoren vorgesehen, also weder ein Drucksensor zur Bestimmung des Raddruckes noch ein Drucksensor zur Bestimmung des Vordruckes, welcher eingangsseitig an der Regelungshydraulik anliegt; dieser Druck ist also beispielsweise im wesentlichen identisch mit dem durch den Hauptbremszylinder 9 bei einer Bremsbetätigung des Bremspedals 16 aufgebauten Druck.

Um eine analoge Einlassventil-Regelung am Einlassventil 7a bzw. 7b betreiben zu können, wird die Kenntnis des über diesem Einlassventil 7a bzw. 7b herrschenden Differenzdrucks benötigt. Für das elektronisch geregeltes Kraftfahrzeugbremssystem 1 mit einer hydraulischen Bremsanlage 1a gemäß Figur 1, welche keinen THZ-Drucksensor aufweist, wird der THZ-Druck als Modell-Vordruck und der Raddruck als Modell-Raddruck in einem Modell berechnet, wobei deren Differenz den für die Einlassventil-Ansteuerung des Einlassventils 7a bzw. 7b relevanten Differenzdruck darstellt.

Für die Modellierung des THZ-Druckes wird zunächst eine Zeitdauer bestimmt, die im Folgenden als Variable Timer bezeichnet wird. Diese Variable Timer gibt die Zeitdauer zwischen der durch einen Bremsvorgang initiierten Fahrzeugverzögerung und dem Zeitpunkt der einsetzenden Regelung des Bremsvorganges, wobei dieser Bremsvorgang durch eine Betätigung des Bremspedals 16 ausgelöst wird. Der Wert der Variable Timer hängt von der Antrittsgeschwindigkeit des Bremspedals 16 ab, also davon, ob ein harter, mittlerer oder leichter Antritt des Bremspedals 16 vorliegt. Bei der Bestimmung des Modell-Vordrucks $P_{THZ-mod}$ geht daher diese Variable Timer mit ein.

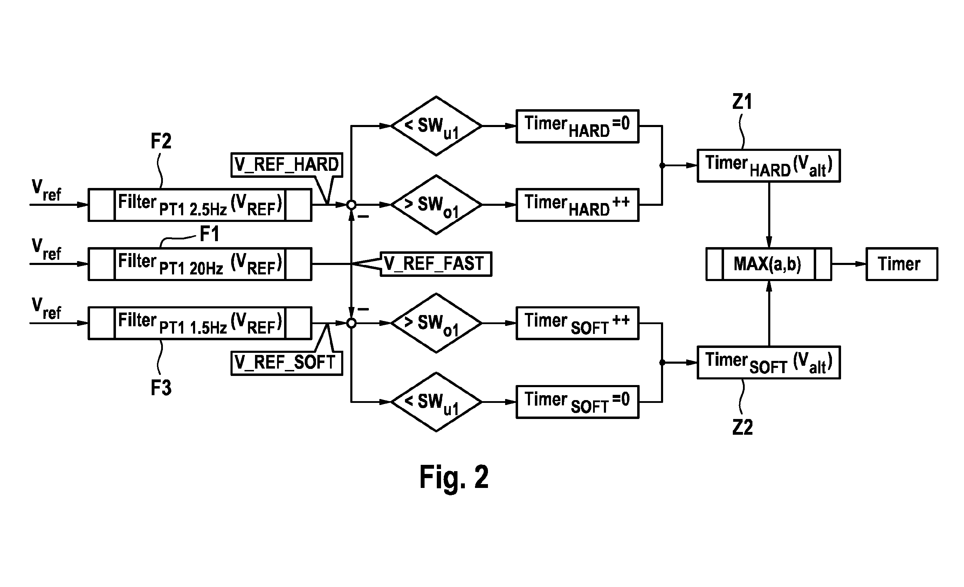

Zunächst wird im Folgenden anhand der Figuren 2, 3 und 4 die Erzeugung dieser Variablen Timer erläutert.

Gemäß Figur 2 wird die aus den Drehzahlsensoren 10a und 10b ermittelte Fahrzeuggeschwindigkeit $V_{ref}$ einem ersten, zweiten und dritten Tiefpassfilter F1, F2 und F3 zugeführt. Diese Tiefpassfilter F1, F2 und F3 sind als Filter 1. Ordnung mit einer Grenzfrequenz $f_{g1}$ = 20 Hz, $f_{g2}$ = 2,5 Hz und $f_{g3}$ = 1,5 Hz ausgeführt. Die derart tiefpassgefilterten Signale der Fahrzeuggeschwindigkeit $v_{ref}$, die gemäß Figur 2 mit $v_{ref\_fast}$, $V_{ref\_hard}$ und $V_{ref\_soft}$ bezeichnet sind, werden zur Auswertung einem Schwellwertvergleich unterzogen.

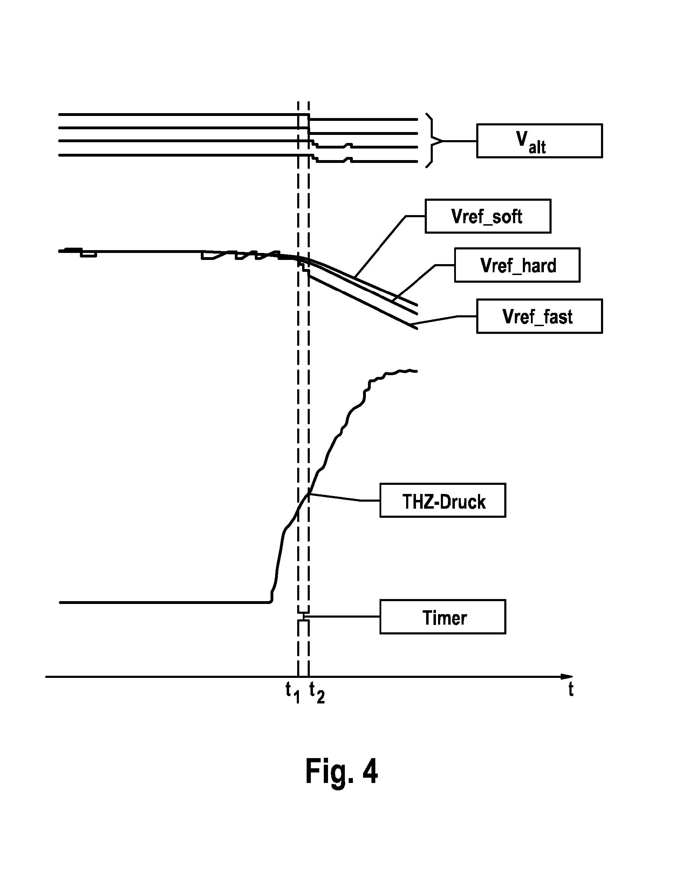

Der Verlauf dieser Signale $v_{ref\_fast}$, $V_{ref\_hard}$ und $v_{ref\_soft}$ sind in Figur 4 dargestellt, woraus ersichtlich ist, dass diese zum Zeitpunkt $t_1$ in eine negative Steigung übergehen, also einen "Knick" aufweisen, der charakteristisch für den Beginn der durch eine Bremspedalbestätigung initiierten Fahrzeugverzögerung ist. In dieser Figur 4 ist ferner zu erkennen, dass der "charakteristische Knick" umso ausgeprägter ist, je stärker der Antritt, also je höher die Antrittsgeschwindigkeit ist. Eine hohe Antrittsgeschwindigkeit bedingt auch einen hohen Druckanstiegsgradienten des entsprechenden Vordrucks.

Vor dem Schwellwertvergleich werden gemäß Figur 2 die beiden Differenzen ($V_{ref\_hard}$ - $V_{ref\_fast}$) und ($V_{ref\_soft}$ - $V_{ref\_fast}$) gebildet und jeweils mit einem oberen Schwellwert $SW_{o1}$ mit einem Wert von 0,3 km/h und einem unteren Schwellwert $SW_{u1}$ mit einem Wert von 0,1 km/h verglichen. Wird der obere Schwellwert $SW_{o1}$ von diesen beiden Differenzsignalen überschritten, wird ein Zähler Z1 bzw. Z2 hochgezählt, falls jedoch der untere Schwellwert $SW_{u1}$

unterschritten wird, führt dies zur Zurücksetzung des jeweiligen Zählers Z1 bzw. Z2. Der obere und untere Schwellwert $SW_{o1}$ und $SW_{u1}$ sind fahrzeugspezifisch gewählt. Die Zähler Z1 und Z2 werden zuvor auf einen Initialwert gesetzt, bspw. auf den Wert 0.

Mit dem nächsten auftretenden Zeitpunkt $t_2$ des Beginns einer Regelung des Bremsvorganges wird der Wert des Zählers Z1 oder Z2 als Variable Timer in dem Steuergerät 20 gespeichert, dessen Zählerstand den höchsten Wert aufweist. Mit diesem Wert der Variablen Timer wird anschließend der Modell-Vordruck $P_{THZ\_mod}$ modelliert.

Zur Bestimmung des Zeitpunkts $t_2$ wird eine Variable $V_{alt}$ aus der Bremsenregelung verwendet, die den Beginn der Ansteuerung eines Einlassventils 7a bzw. 7b oder eines Auslassventils 8a bzw. 8b anzeigt. Diese Variable $v_{alt}$ steht für jedes Rad 11 und 12 (und für die Räder des Bremskreises II) des Fahrzeugs zur Verfügung, weshalb der Verlauf von vier solcher Variablen in Figur 4 dargestellt ist. Zusätzlich zeigt Figur 4 auch den Verlauf des THZ-Druckes.

Die Grenzfrequenzen $f_{g2}$ und $f_{g3}$ der Tiefpassfilter F2 und F3 sind so niedrig gewählt, dass ein starker Antritt bzw. ein leichter Antritt in den tiefpassgefilterten Fahrzeuggeschwindigkeitssignal $v_{ref\_hard}$, bzw. $v_{ref\_soft}$ optimal ausgeprägt sind, wobei die Eigenschaft von digitalen Filtern genutzt wird, die bei kleinen Grenzfrequenzen bei abnehmenden Signal auch einen abnehmenden Wert erzeugen.

Die Grenzfrequenz $f_{g1}$ des Tiefpassfilters F1 ist gegenüber den Grenzfrequenzen $f_{g2}$ und $f_{g3}$ wesentlich höher gewählt, wodurch mit der gegenüber diesen beiden Grenzfrequenzen $f_{g2}$ und $f_{g3}$ relativ hohen Grenzfrequenz $f_{g1}$ langsame Änderungen erfasst werden, insbesondere ein Offset-Drift, der durch die Differenzbildung eliminiert wird.

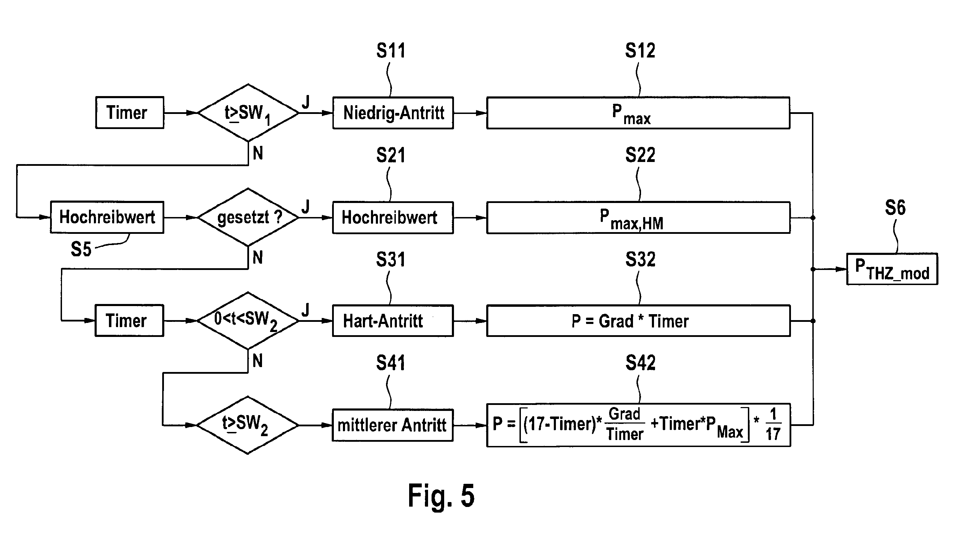

Zur Modellierung des Modell-Vordrucks $P_{THZ\_mod}$ wird gemäß Figur 5 der Wert der Variablen Timer durch Schwellvergleiche mit einem ersten und zweiten Schwellwert $SW_1$ und $SW_2$ ausgewertet. Zunächst wird die Variable Timer mit dem ersten Schwellwert $SW_1$, der vorzugsweise einen Wert von 25 aufweist, verglichen. Wenn der Wert dieser Variable Timer größer oder gleich diesem ersten Schwellwert $SW_1$ ist, wird von einem leichten Antritt, also gemäß nachfolgenden Schritt S11 von einer niedrigen Antrittsgeschwindigkeit ausgegangen. Für diesen Fall wird in Schritt S12 ein Druck $P_{max}$ für den Regelungseintritt mittels einer im Steuergerät 20 gespeicherten, fahrzeugspezifischen Bremsdruck-Verzögerungskennlinie in Abhängigkeit der gemessenen Fahrzeugverzögerung bestimmt und im Schritt S6 als Modell-Vordruck $P_{THz\_mod}$ ausgegeben.

Wenn die Variable Timer kleiner als der erste Schwellwert $SW_1$ ist, wird in Schritt S5 eine Reibwerterkennung durchgeführt und im Fall eines erkannten Hochreibwertes, also bei $1 \le p$ gemäß Schritt S21 im nachfolgenden Schritt S22 ein Druck $P_{max,HM}$ ebenfalls aus der Bremsdruck-Verzögerungskennlinie entnommen, jedoch bei einem Verzögerungswert von 1g und dieser Druck $P_{max,HM}$ im Schritt S6 als Modell-Vordruck $P_{THZ\_mod}$ ausgegeben.

Wird jedoch kein Hochreibwert erkannt, wird der Wert der Variable Timer mit einem zweiten Schwellwert $SW_2$, der vorzugsweise einen Wert von 10 aufweist, verglichen. Liegt der Wert der Variablen Timer unter diesem zweiten Schwellwert $SW_2$ wird in Schritt S31 ein harter Antritt, also eine hohe Antrittsgeschwindigkeit erkannt. Gemäß nachfolgendem Schritt S32 wird ein Schätzdruck P als Produkt aus der Variablen Timer und einer Variablen Grad berechnet. Dieser Schätzdruck P wird im Schritt S6 als Modell-Vordruck $P_{THZ\_mod}$ ausgegeben.

Zur Bestimmung dieser Variable Grad wird ein weiteres mathematisches Druck-Modell verwendet, nämlich eine im Bremssystem gespeicherte, fahrzeugspezifische THZ-Druckgradient-Reibwertkennlinie. Die Variable Grad wird daher in Abhängigkeit des detektierten Reibwertes bestimmt und stellt den erwarteten THZ-Druckgradienten dar.

Falls jedoch die Variable Timer gleich oder größer als der zweite Schwellwert $SW_2$ (aber kleiner als der erste Schwellwert $SW_1$) ist, wird in Schritt S41 von einem mittleren Antritt, also von einer mittleren Antrittsgeschwindigkeit ausgegangen und im nachfolgenden Schritt S42 mittels einer Schätzfunktion ein Druck P berechnet, der im Schritt S6 als Modell-Vordruck $P_{THz-mod}$ ausgegeben wird.

Die Schätzfunktion für P wird in Abhängigkeit der Variablen Grad, Timer und des Wertes $P_{max}$ fahrzeugspezifisch bestimmt und lautet bspw.

$$P = \left[ (17 - Timer) \ x \ \frac{Grad}{Timer} \ + \ Timer \ x \ P_{max} \right].$$

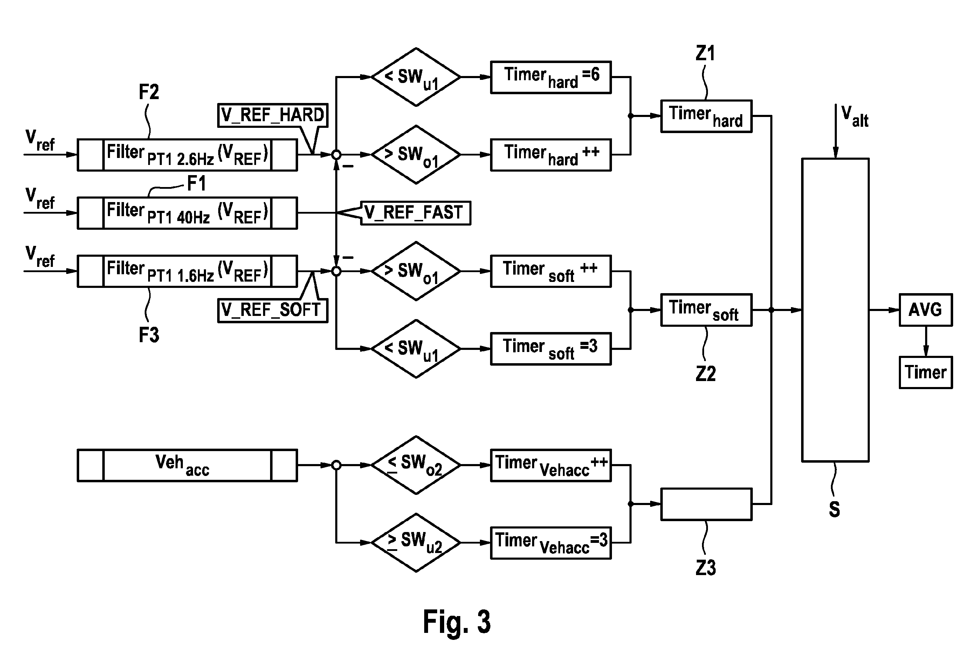

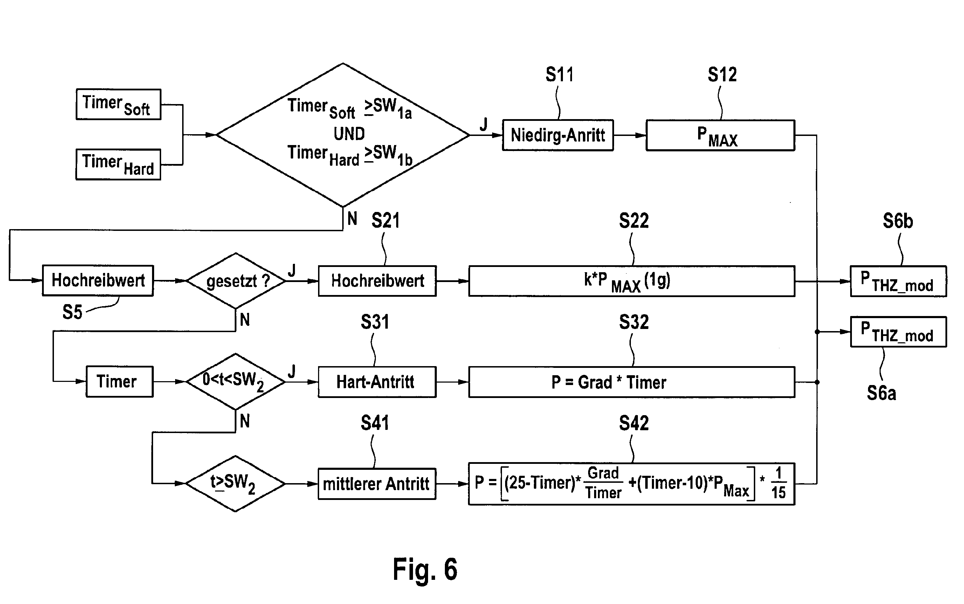

Eine alternative Ermittlung der Variablen Timer und deren Verwendung zur Bestimmung des Modell-Vordrucks $P_{THZ\_mod}$ zeigt Figur 3 bzw. Figur 6. Damit wird die Robustheit der Bestimmung dieses Modell-Vordrucks $P_{THZ\_mod}$, also die Zuverlässigkeit verbessert.

Der Unterschied der Bestimmung der Variablen Timer gemäß Figur 3 im Vergleich zu Figur 2 besteht darin, dass ein dritter Zähler Z3 vorgesehen ist, welcher die aus den Raddrehzahlen gewonnene ungefilterte Fahrzeugverzögerung $Veh_{acc}$ berücksichtigt, indem der Zähler Z3 inkrementiert wird, sobald die Fahrzeugverzögerung $Veh_{acc}$ größer als ein oberer Schwellwert $SW_{02}$ mit einem Wert von 0,08g und zurückgesetzt wird, wenn die Fahrzeugverzögerung $Veh_{acc}$ kleiner als ein unterer Schwellwert $SW_{u2}$ mit einem Wert von 0,06 unterschritten wird. Ein weiterer Unterschied zu Figur 2 besteht darin, dass der erste Tiefpassfilter F1 eine Grenzfrequenz $f_{g1}$ von 40 Hz aufweist. Gemäß Figur 3 werden die Zähler Z1, Z2 und Z3 zuvor auf einen Initialwert gesetzt, bspw. der Zähler Z1 auf den Wert 6, der Zähler Z2 und Zähler Z3 jeweils auf den Wert 3.

Eine Auswertung der Zählerstände der drei Zähler Z1, Z2 und Z3 wird mittels eines Selektors S durchgeführt, der zum nächsten auftretenden Zeitpunkt $t_2$ des Beginns einer Regelung des Bremsvorganges, der mit der Variablen $V_{alt}$ zur Verfügung gestellt wird, der Zählerstand mit dem höchsten Wert verworfen und mit einer Funktionseinheit AVG anschließend der Mittelwert der beiden verbleibenden Zählerstände gebildet als Variable Timer gespeichert. Mit diesem Wert der Variablen Timer wird anschließend der Modell-Vordruck $P_{THZ-mod}$ gemäß der nachfolgend erläuterten Figur 6 modelliert.

Zur Modellierung des Modell-Vordrucks PTHZ_mod wird gemäß Figur 6 nicht nur der Wert der Variablen Timer durch Schwellvergleiche ausgewertet, sondern auch die Zählerstände $Timer_{soft}$ und $Timer_{hard}$ des ersten bzw. zweiten Zählers Z1 bzw. Z2 gemäß Figur 3 mit einem ersten Schwellwert $SW_{1a}$ bzw. einem weiteren ersten Schwellwert $SW_{1b}$ verglichen. Wenn der Wert der Variablen $Timer_{soft}$ größer oder gleich diesem ersten Schwellwert $SW_{1a}$ (vorzugsweise 50) ist und der Wert der Variablen $Timer_{hard}$ (vorzugsweise 25) größer oder gleich diesem weiteren ersten Schwellwert $Timer_{hard}$ (vorzugsweise 25) ist, wird von einem leichten Antritt, also gemäß nachfolgenden Schritt S11 von einer niedrigen Antrittsgeschwindigkeit ausgegangen. Für diesen Fall wird in Schritt S12 ein Druck $P_{max}$ für den Regelungseintritt mittels einer im Steuergerät 20 gespeicherten, fahrzeugspezifischen und achsabhängigen Bremsdruck-Verzögerungskennlinie in Abhängigkeit der gemessenen Fahrzeugverzögerung bestimmt und der größere der beiden Drücke im Schritt S6a als Modell-Vordruck PTHZ_mod ausgegeben.

Wenn die Bedingungen für die beiden Variablen $Timer_{soft}$ und $Timer_{hard}$ nicht erfüllt sind, wird in Schritt S5 eine Reibwerterkennung durchlaufen und im Fall eines erkannten Hochreibwertes, also bei $1 \leq \mu$ gemäß Schritt S21 im nachfolgenden Schritt S22 ein Druck $P_{max}(1g)$ ebenfalls aus der Bremsdruck-Verzögerungskennlinie bei 1 g Verzögerung entnommen. Da die Bremsdruck-Verzögerungs-Kennlinie den Zusammenhang zwischen Blockierdruck und Fahrzeugverzögerung im eingeschwungenen Zustand während der Regelung darstellt, kann ein Faktor k (üblicherweise 1 bis 1,3) berücksichtigt werden, mit welchem der aus der Kennlinie ermittelte Druck $P_{max}(1g)$ multipliziert wird, um eine Drucküberhöhung zu Beginn der Regelung zu berücksichtigen. Dieser Druck $k*P_{max}(1g)$ wird in einem Schritt S6b als Modell-Vordruck $P_{THz-mod}$ ausgegeben.

Wird jedoch kein Hochreibwert erkannt, wird der gemäß Figur 3 bestimmte Wert der Variable Timer mit einem zweiten Schwellwert $SW_2$, der vorzugsweise einen Wert von 10 aufweist, verglichen. Liegt der Wert der Variablen Timer unter diesem zweiten Schwellwert $SW_2$ wird in Schritt S31 ein harter Antritt, also eine hohe Antrittsgeschwindigkeit erkannt. Gemäß nachfolgendem Schritt S32 wird ein Schätzdruck P als Produkt aus der Variablen Timer und einer bereits im Zusammenhang mit der Beschreibung der Figur 5 erläuterten Variablen Grad berechnet. Dieser Schätzdruck P, der auf den Druck, der sich bei 1g Verzögerung aus der Bremsdruck-Verzögerungskennlinie ergibt, limitiert ist, wird im Schritt S6a als Modell-Vordruck $P_{THZ\_mod}$ ausgegeben.

Falls jedoch die Variable Timer gleich oder größer als der zweite Schwellwert $SW_2$ (aber kleiner als der erste Schwellwert $SW_1$) ist, wird in Schritt S41 von einem mittleren Antritt, also von einer mittleren Antrittsgeschwindigkeit ausgegangen und im nachfolgenden Schritt S42 mittels einer Schätzfunktion ein Druck P berechnet, der im Schritt S6 als Modell-Vordruck $P_{THZ\_mod}$ ausgegeben wird.

Die Schätzfunktion für P wird in Abhängigkeit der Variablen Grad, Timer und des Wertes $P_{max}$ fahrzeugspezifisch bestimmt und lautet bspw.

$$P = \left[ (25 - Timer) \ x \ \frac{Grad}{Timer} \ + \ (Timer - 10) \ x \ P_{max} \right] x \frac{1}{15}$$

Für alle Berechnungspfade gemäß Figur 6 gilt, dass der modellierte Modell-Vordruck $P_{THz\_mod}$ auf eine untere Grenze, welche den Druck aus der Bremsdruck-Verzögerungs-Kennlinie bei der aktuellen Verzögerung darstellt, und eine obere Grenze, welche den Druck aus der Bremsdruck-Verzögerungs-Kennlinie bei 1g Verzögerung repräsentiert, limitiert wird. Einen Sonderfall stellt dabei der zweite Berechnungspfad mit Schritt S6b dar, bei die obere Grenze noch um den Faktor k erhöht werden kann.

Dieser gemäß den Figuren 5 und 6 modellierte Modell-Vordruck $P_{THz-mod}$ wird als Startwert für den Bremsdruck in den Rädern verwendet, so dass damit der Brems-Regelvorgang, bspw. eine ABS-Regelung durchgeführt werden kann. Der erfindungsgemäß modellierte Modell-Vordruck $P_{THz\_mod}$ kann während der Bremsregelung durch die bekannte THZ-Druckschätzung aus der Pumpendrehzahl der Hydraulikpumpe 3 bzw. aus dem Auslaufverhalten im PWM-Betrieb abgelöst werden.

Die Initialisierung der für jedes Rad verwendeten Modell-Vordrücke erfolgt auf den Wert des ersten geschätzten $P_{THz\_mod}$, wobei in Abhängigkeit des durchlaufenen Berechnungspfades für den geschätzten $P_{THz\_mod}$ noch ein Korrekturfaktor berücksichtigt werden kann, der die systembedingte Totzeit zwischen dem Aufbau des Fahrerdrucks im Hauptbremszylinder 9 und in dem jeweiligen Rad berücksichtigt.

Um die Zeit seit Regelungseintritt, bis zu der eine Druckschätzung aus der Pumpenspannung möglich ist, zu überbrücken, wird der zum Regelungseintritt geschätzte Modell-Vordruck $P_{THz\_mod}$ weiter gerampt, also mit einem vorgegebenen Gradienten allmählich erhöht. Dieser Gradient kann von dem Zeitpunkt abhängig gemacht werden, wie lange ein Einlassventil bereits einen Regelvorgang durchgeführt hat. Mit zunehmender Zeitdauer nimmt auch dieser Gradient ab, der bspw. aus dem Quotient aus dem geschätzten Modell-Vordruck $P_{THZ\_mod}$ und der Variablen Timer bestimmt werden kann.

Da die Information über die über den Einlassventilen herrschende Druckdifferenz erst zum ersten Druckaufbau benötigt wird, wird die Robustheit der Bestimmung des modellierten Modell-Vordruck $P_{THZ\_mod}$ weiter dadurch erhöht, dass das Radverhalten fortwährend beobachtet und damit der geschätzte Modell-Vordruck $P_{THz\_mod}$ plausibilisiert wird. Im Falle einer nachträglichen Niedrigreibwert-Erkennung wird ein, wegen der Annahme von Hochreibwert falsch geschätzter Modell-Vordruck $P_{THZ\_mod}$ sowie die jedem Rad zugeordneten Modell-Vordrücke $P_{THZ\_mod}$ nach unten korrigiert. Diese Plausibilisierung bietet sich hauptsächlich auf Niedrigreibwert an, da dort dem ersten Druckaufbau üblicherweise ein langer Druckabbau vorausgeht und damit genügend Zeit zur Auswertung des Rad-Verhaltens bleibt.

In den Ausführungsbeispielen wird davon ausgegangen, dass kein THZ-Drucksensor vorgesehen ist. Hierauf ist das erfindungsgemäße Verfahren nicht beschränkt, sondern kann auch für eine Rückfallebene dienen, nämlich im Falle eines Ausfalls oder eines Defektes eines vorhandenen THZ-Sensors eingesetzt zu werden. Insbesondere kann in einer solchen Rückfallebene, wenn nicht auf eine THZ-Druckschätzung mittels der Pumpendrehzahl zurückgegriffen wird, eine ausreichende Digital-Ventilansteuerung der Einlassventile 7a und 7b bzw. der Auslassventile 8a und 8b gewährleistet werden, die besser als im Stand der Technik bekannte Verfahren sind.

Bezugszeichen:

| | |
|---|---|
| 1 | elektronisch geregeltes Kraftfahrzeugbremssystem |
| 1a | hydraulische Bremsanlage |
| 2a | Radbremse des rechten Hinterrades 12, |
| 3 | Hydraulikpumpe |
| 4 | Elektromotor für Antrieb der Hydraulikpumpe |
| 5 | Vorratsbehälter |
| 6 | Umschaltventil |
| 7a | Einlassventil für Bremssattel 2a |
| 7b | Einlassventil für Bremssattel 2b |
| 8a | Auslassventil für Bremssattel 2a |
| 8b | Auslassventil für Bremssattel 2b |
| 9 | Hauptbremszylinder |
| 10a | Drehzahlsensor |
| 10b | Drehzahlsensor |
| 11 | Vorderes linkes Rad |
| 12 | Hinteres rechtes Rad |
| 13 | Bremskraftverstärker |
| 14 | Niederdruckspeicher |
| 15 | Trennventil |
| 16 | Bremspedal |
| 20 | ESC-Steuergerät |
| 21 | ESC-Sensorik |
| | |
| I | erster Bremskreis |
| II | zweiter Bremskreis |

**Patentansprüche**

**1.**  Verfahren zur Bestimmung eines Modell-Vordrucks ($P_{THZ\_mod}$) mittels eines mathematischen Modells in einem elektronisch geregelten Kraftfahrzeugbremssystem (1), bei dem mittels des Modell-Vordrucks ($P_{THZ–mod}$) als wenigstens ein Parameter eine Regelung eines einen Bremsdruckaufbau an wenigstens einer Radbremse (2a, 2b) bewirkenden, elektrisch steuerbaren Hydraulikventils (7a, 7b) durchgeführt wird und Radsensoren (10a, 10b) zur Ermittlung eines die Fahrzeuggeschwindigkeit anzeigenden Fahrzeuggeschwindigkeitssignals sowie ein betätigbares Bremspedal (16) vorgesehen sind, **dadurch gekennzeichnet dass**

- aus dem Fahrzeuggeschwindigkeitssignal ($v_{ref}$) wenigstens ein erstes tiefpassgefiltertes Fahrzeuggeschwindigkeitssignal ($V_{ref\_fast}$, $v_{ref\_hard}$, $V_{ref\_soft}$) mittels eines Tiefpassfilters (F1, F2, F3) mit einer ersten Grenzfrequenz ($f_{g1}$, $f_{g2}$, $f_{g3}$) erzeugt wird, aus dessen zeitlichen Verlauf der Zeitpunkt ($t_1$) einer signifikanten Abnahme detektiert wird, der als Startkriterium zur Bestimmung einer mit einer durch einen Bremsvorgang initiierten Fahrzeugverzögerung beginnenden Zeitdauer (Timer) dient, welche mit dem Zeitpunkt ($t_2$) der einsetzenden Regelung des Bremsvorganges endet,
- zur Klassifizierung der Antrittsgeschwindigkeit des Bremspedals (16) die Zeitdauer (Timer) mit wenigstens einem ersten oder zweiten Schwellwert ($SW_1$, $SW_2$) verglichen wird, und
- in Abhängigkeit des Vergleichsergebnisses mittels des mathematischen Modells ein Modell-Vordruck ($P_{THZ\_mod}$) bestimmt wird.

**2.** Verfahren nach Anspruch 1, **dadurch gekennzeichnet, dass**

- wenigstens ein zweites tiefpassgefiltertes Fahrzeuggeschwindigkeitssignal ($V_{ref\_hard}$) mittels eines Tiefpasses (F2) mit einer gegenüber der ersten Grenzfrequenz ($f_{g1}$) kleineren zweiten Grenzfrequenz ($f_{g2}$) erzeugt wird, und
- zur Bestimmung des als Startkriterium dienenden Zeitpunktes ($t_1$) zur Berechnung der Zeitdauer (Timer) ein erster Zähler (Z1) in Abhängigkeit der Differenz aus dem ersten und zweiten tiefpassgefilterten Fahrzeuggeschwindigkeitssignal ($v_{ref\_fast}$, $v_{ref\_hard}$) gesteuert wird.

**3.** Verfahren nach Anspruch 2, **dadurch gekennzeichnet, dass**

- ein drittes tiefpassgefiltertes Fahrzeuggeschwindigkeitssignal ($v_{ref\_soft}$) mittels eines Tiefpasses (F3) mit einer gegenüber der zweiten Grenzfrequenz ($f_{g2}$) kleineren dritten Grenzfrequenz ($f_{g3}$) erzeugt wird, und
- zur Bestimmung des als Startkriterium dienenden Zeitpunktes zur Berechnung der Zeitdauer ein zweiter Zähler (Z2) in Abhängigkeit der Differenz aus dem ersten und dritten tiefpassgefilterten Fahrzeuggeschwindigkeitssignal ($V_{ref\_fast}$, $V_{ref\_soft}$) gesteuert wird.

**4.** Verfahren nach Anspruch 3, **dadurch gekennzeichnet, dass** der erste bzw. zweite Zähler (Z1, Z2) bei einem Überschreiten der Differenz aus dem ersten und zweiten bzw. ersten und dritten tiefpassgefilterten Fahrzeuggeschwindigkeitssignal ($V_{ref\_fast}$, $V_{ref\_hard}$, $V_{ref\_soft}$) eines ersten Schwellwertes ($SW_{o1}$) hoch gezählt und bei Unterschreiten eines zweiten Schwellwertes ($SW_{u1}$) zurückgesetzt wird.

**5.** Verfahren nach Anspruch 4, **dadurch gekennzeichnet, dass** mit dem Regelungsbeginn des Bremsvorganges der Zählerstand des ersten oder zweiten Zählers (Z1, Z2) als Zeitdauer (Timer) verwendet wird, dessen Wert den höchsten Zählerstand aufweist.

**6.** Verfahren nach Anspruch 3 oder 4, **dadurch gekennzeichnet, dass** - aus den Signalen der Raddrehzahlsensoren die Fahrzeugverzögerung ermittelt und mit einem oberen Schwellwert ($SW_{o2}$) und einem unteren Schwellwert ($SW_{u2}$) verglichen wird, und ein dritter Zähler (Z3) vorgesehen ist, welcher inkrementiert wird, wenn die Fahrzeugverzögerung größer als der obere Schwellwert ($SW_{o2}$) ist und zurückgesetzt wird, wenn die Fahrzeugverzögerung kleiner als der untere Schwellwert ($SW_{o1}$) ist.

**7.** Verfahren nach Anspruch 6, **dadurch gekennzeichnet, dass** mit dem Regelungsbeginn des Bremsvorganges zwei Zählerstände mit den niedrigsten Werten aus den von dem ersten, zweiten und dritten Zähler erreichten Zählerständen ausgewählt werden, wobei der Mittelwert der Zählerstände dieser beiden Zähler als Wert der Variablen Timer verwendet wird.

**8.** Verfahren nach einem der vorhergehenden Ansprüche, **dadurch gekennzeichnet, dass** als mathematisches Modell zur Bestimmung des Modell-Vordrucks ($P_{THz\_mod}$) eine im Bremssystem gespeicherte, fahrzeugspezifische Bremsdruck-Verzögerungskennlinie vorgesehen ist.

**9.** Verfahren nach Anspruch 8, **dadurch gekennzeichnet, dass** der Modell-Vordruck ($P_{THz\_mod}$) aus der Verzögerung des Kraftfahrzeugs und der Bremsdruck-Verzögerungskennlinie bestimmt wird, wenn die Zeitdauer (Timer) wenigstens den Wert des ersten Schwellwertes ($SW_1$, $SW_2$) aufweist.

**10.** Verfahren nach Anspruch 9, **dadurch gekennzeichnet, dass** eine Reibwertschätzung durchgeführt wird und bei Erkennung einer Hochreibwertfahrbahn mit einem vorgegebenen Verzögerungswert ein Modell-Vordruck ($P_{THz\_mod}$) mittels der Bremsdruck-Verzögerungskennlinie bestimmt wird, wenn die Zeitdauer (Timer) kleiner als

der erste Schwellwert (SW$_1$, SW$_2$) ist.

11. Verfahren nach Anspruch 3 und 8, **dadurch gekennzeichnet, dass** der Modell-Vordruck (P$_{THz-mod}$) aus der Verzögerung des Kraftfahrzeugs und der Bremsdruck-Verzögerungskennlinie bestimmt wird, wenn der Zählwert (Timer$_{hard}$) des ersten Zählers (Z1) größer oder gleich einem ersten Schwellwert (SW$_{1a}$) und der Zählwert (Timer$_{soft}$) des zweiten Zählers (Z2) größer oder gleich einem weiteren ersten Schwellwert (SW$_{1b}$) ist.

12. Verfahren nach Anspruch 11, **dadurch gekennzeichnet, dass** eine Reibwertschätzung durchgeführt wird und bei Erkennung einer Hochreibwertfahrbahn mit einem vorgegebenen Verzögerungswert ein Modell-Vordruck (P$_{THz-mod}$) mittels der Bremsdruck-Verzögerungskennlinie bestimmt wird, wenn wenigstens der Zählwert (Timer$_{hard}$) des ersten Zählers (Z1) oder der Zählwert (Timer$_{soft}$) des zweiten Zählers (Z2) kleiner als der erste Schwellwert (SW$_{1a}$) bzw. der weitere erste Schwellwert (SW$_{1b}$) ist.

13. Verfahren nach einem der Ansprüche 8 bis 12 , **dadurch gekennzeichnet, dass** - als mathematisches Modell zur Bestimmung des Modell-Vordrucks (P$_{THZ\_mod}$) eine im Bremssystem gespeicherte, fahrzeugspezifische THZ-Druckgradient-Reibwertkennlinie vorgesehen ist, und

   - der Modell-Vordruck (P$_{THz-mod}$) als Produkt aus dem mittels eines Reibwertes und der THZ-Druckgradient-Reibwertkennlinie bestimmten THZ-Druckgradient (Grad) und dem Wert der Zeitdauer (Timer) berechnet wird, falls kein Hochreibwert vorliegt und der Wert der Zeitdauer (Timer)kleiner als ein zweiter Schwellwert (SW$_2$) ist.

14. Verfahren nach einem der Ansprüche 8 bis 13, **dadurch gekennzeichnet, dass** - als mathematisches Modell zur Bestimmung des Modell-Vordrucks (P$_{THz-mod}$) eine im Bremssystem gespeicherte, fahrzeugspezifische THZ-Druckgradient-Reibwertkennlinie vorgesehen ist, und

   - der Modell-Vordruck (P$_{THZ-mod}$) als Schätzfunktion in Abhängigkeit des aus dem mittels eines Reibwertes und der THZ-Druckgradient-Reibwertkennlinie bestimmten THZ-Druckgradienten (Grad), des Wertes der Zeitdauer (Timer) und des mittels der Verzögerung des Kraftfahrzeugs und der Bremsdruck-Verzögerungskennlinie ermittelten Druckwertes (P$_{max}$) bestimmt wird, falls kein Hochreibwert vorliegt und der Wert der Zeitdauer (Timer) den zweiten Schwellwert (SW$_2$) erreicht und kleiner als der erste Schwellwert (SW$_1$) ist.

15. Verfahren nach einem der Ansprüche 3 bis 14, **dadurch gekennzeichnet, dass** zur Erzeugung der ersten, zweiten und dritten tiefpassgefilterten Fahrzeuggeschwindigkeitssignale (v$_{ref\_fast}$, v$_{ref\_hard}$, v$_{ref\_soft}$) jeweils ein Tiefpassfilter (F1, F2, F3), vorzugsweise ein Tiefpassfilter 1. Ordnung verwendet wird.

## Claims

1. Method for determining a model upstream pressure (P$_{TMC-mold}$) by means of a mathematical model in an electronically regulated motor vehicle brake system (1), in which the regulation of an electrically controllable hydraulic valve (7a, 7b) causing a build-up of brake pressure on at least one wheel brake (2a, 2b) is carried out using the model upstream pressure (P$_{TMC-mold}$) as at least one parameter, and wheel sensors (10a, 10b) for determining a vehicle speed signal indicating the speed of the vehicle and a brake pedal (16) that can be operated are provided, **characterized in that**,

   - from the vehicle speed signal (v$_{ref}$) at least one first low pass filtered vehicle speed signal (V$_{ref\_fast}$, V$_{ref\_hard}$, V$_{ref-soft}$) is generated by means of a low pass filter (F1, F2, F3) with a first limit frequency (f$_{g1}$, f$_{g2}$, f$_{g3}$), from whose time profile the point in time (t$_1$) of a significant decrease is detected, which is used as the starting criterion for determining a time duration (Timer) starting with a deceleration of the vehicle initiated by a braking process, which ends at the point in time (t$_2$) of the onset of regulation of the braking process,
   - for the classification of the actuation speed of the brake pedal (16) the time duration (Timer) is compared with at least one first or second threshold value (SW$_1$, SW$_2$), and
   - depending on the comparison result a model upstream pressure (P$_{TMC-mod}$) is determined by means of the mathematical model.

2. Method according to Claim 1, **characterized in that**

   - at least one second low pass filtered vehicle speed signal (V$_{ref-hard}$) is produced by means of a low pass (F2) with a lower second limit frequency ($f_{g2}$) compared to the first limit frequency ($f_{g1}$), and
- for determining the point in time ($t_1$) serving as the starting criterion for computation of the time duration (Timer), a first counter (Z1) is controlled depending on the difference of the first and second low pass filtered vehicle speed signals ($V_{ref\_fast}$, $V_{ref\_hard}$).

3. Method according to Claim 2, **characterized in that**

   - a third low pass filtered vehicle speed signal ($v_{ref\_soft}$) is generated by means of a low pass (F3) with a lower third limit frequency ($f_{g3}$) compared to the second limit frequency ($f_{g2}$), and
   - for determining the point in time serving as a starting criterion for the computation of the time duration, a second counter (Z2) is controlled depending on the difference of the first and third low pass filtered vehicle speed signals ($V_{ref\_fast}$, $V_{ref\_soft}$).

4. Method according to Claim 3, **characterized in that** the first or second counter (Z1, Z2) is incremented if the difference of the first and second or first and third low pass filtered vehicle speed signals ($V_{ref\_fast}$, $V_{ref\_hard}$, $V_{ref\_soft}$) exceeds a first threshold value ($SW_{o1}$) and are reset if it is below a second threshold value ($SW_{u1}$).

5. Method according to Claim 4, **characterized in that** with the start of regulation of the braking process, the counter value of the first or second counter (Z1, Z2) whose value has the highest counter value is used as the time duration (Timer).

6. Method according to Claim 3 or 4, **characterized in that**

   - the deceleration of the vehicle is determined from the signals of the wheel revolution rate sensors and is compared with an upper threshold value ($SW_{o2}$) and a lower threshold value ($SW_{u2}$), and a third counter (Z3) is provided, which is incremented if the deceleration of the vehicle exceeds the upper threshold value ($SW_{o2}$) and is reset if the deceleration of the vehicle is less than the lower threshold value ($SW_{u2}$).

7. Method according to Claim 6, **characterized in that** with the start of regulation of the braking process, two counter values with the lowest values are selected from the counter values achieved by the first, second and third counters, wherein the average value of the counter values of said two counters is used as the value of the variable Timer.

8. Method according to any one of the preceding claims, **characterized in that** a vehicle-specific brake pressure-deceleration characteristic stored in the brake system is provided as a mathematical model for determining the model upstream pressure ($P_{TMC-mod}$).

9. Method according to Claim 8, **characterized in that** the model upstream pressure ($P_{TMC-mod}$) is determined from the deceleration of the motor vehicle and the brake pressure-deceleration characteristic if the time duration (Timer) has at least the value of the first threshold value ($SW_1$, $SW_2$).

10. Method according to Claim 9, **characterized in that** an estimation of the coefficient of friction is carried out and, on identifying a road with a high coefficient of friction with a specified deceleration value, a model upstream pressure ($P_{TMC-mod}$) is determined by means of the brake pressure-deceleration characteristic if the time duration (Timer) is less than the first threshold value ($SW_1$, $SW_2$).

11. Method according to Claim 3 and 8, **characterized in that** the model upstream pressure ($P_{TMc-mod}$) is determined from the deceleration of the motor vehicle and the brake pressure-deceleration characteristic if the counter value ($Timer_{hard}$) of the first counter (Z1) is greater than or equal to a first threshold value ($SW_{1a}$) and the counter value ($Timer_{soft}$) of the second counter (Z2) is greater than or equal to a further first threshold value ($SW_{1b}$).

12. Method according to Claim 11, **characterized in that** an estimation of the coefficient of friction is carried out and, on identifying a road with a high coefficient of friction with a specified deceleration value, a model upstream pressure ($P_{TMC-mod}$) is determined by means of the brake pressure-deceleration characteristic if at least the counter value ($Timer_{hard}$) of the first counter (Z1 or the counter value ($Timer_{soft}$) of the second counter (Z2) is less than the first threshold value ($SW_{1a}$) or the further first threshold value ($SW_{1b}$).

13. Method according to any one of Claims 8 to 12, **characterized in that**

- a vehicle-specific TMC pressure gradient-coefficient of friction characteristic stored in the brake system is provided as a mathematical model for determining the model upstream pressure ($P_{TMC\_mod}$), and
- the model upstream pressure ($P_{TMC\_mod}$) is computed as the product of the TMC pressure gradient (Grad) determined by means of a coefficient of friction and the TMC pressure gradient-coefficient of friction characteristic and of the value of the time duration (Timer) if there is no high coefficient of friction and the value of the time duration (Timer) is less than a second threshold value ($SW_2$).

14. Method according to any one of Claims 8 to 13, **characterized in that**

- a vehicle-specific TMC pressure gradient-coefficient of friction characteristic stored in the brake system is provided as a mathematical model for determining the model upstream pressure ($P_{TMC-mod}$), and
- the model upstream pressure ($P_{TMC\_mod}$) is determined as an estimation function depending on the TMC pressure gradient (Grad) determined by means of a coefficient of friction and the TMC pressure gradient-coefficient of friction characteristic, on the value of the time duration (Timer) and on the pressure value ($P_{max}$) determined from the deceleration of the motor vehicle and the brake pressure-deceleration characteristic if there is no high coefficient of friction and the value of the time duration (Timer) reaches the second threshold value ($SW_2$) and is less than the first threshold value ($SW_1$).

15. Method according to any one of Claims 3 to 14, **characterized in that** a low pass filter (F1, F2, F3), preferably a first order low pass filter, is used in each case for generating the first, second and third low pass filtered vehicle speed signals ($V_{ref-fast}$, $V_{ref\_hard}$, $V_{ref\_soft}$).

**Revendications**

1. Procédé de détermination d'un modèle de pression d'admission ($P_{THZ\_mod}$) au moyen d'un modèle mathématique dans un système de freinage de véhicule automobile (1) à régulation électronique, avec lequel, en prenant le modèle de pression d'admission ($P_{THZ-mod}$) comme au moins un paramètre, est effectuée une régulation d'une vanne hydraulique (7a, 7b) pouvant être commandée électriquement qui produit une mise en pression de freinage au niveau d'au moins un frein de roue (2a, 2b), et il existe des capteurs de roue (10a, 10b) destinés à déterminer un signal de vitesse de véhicule indiquant la vitesse du véhicule ainsi qu'une pédale de frein (16) actionnable, **caractérisé en ce que**

- au moins un premier signal de vitesse de véhicule filtré passe-bas ($V_{ref\_fast}$, $V_{ref\_hard}$, $V_{ref\_soft}$) est généré à partir du signal de vitesse de véhicule ($V_{ref}$) par l'intermédiaire d'un filtre passe-bas (F1, F2, F3) ayant une première fréquence de coupure ($f_{g1}$, $f_{g2}$, $f_{g3}$), à partir de la courbe dans le temps duquel est détecté l'instant ($t_1$) d'une diminution importante, lequel sert de critère de départ pour la détermination d'une durée (Timer) qui commence par un ralentissement du véhicule initié par une opération de freinage et qui se termine avec l'instant ($t_2$) de l'entrée en action de la régulation de l'opération de freinage,
- en vue de classifier la vitesse d'actionnement de la pédale de frein (16), la durée (Timer) est comparée avec au moins une première ou une deuxième valeur de seuil ($SW_1$, $SW_2$) et
- un modèle de pression d'admission ($P_{THZ\_mod}$) est déterminé au moyen du modèle mathématique en fonction du résultat de la comparaison.

2. Procédé selon la revendication 1, **caractérisé en ce que**

- au moins un deuxième signal de vitesse de véhicule filtré passe-bas ($V_{ref\_hard}$) est généré par l'intermédiaire d'un filtre passe-bas (F2) ayant une deuxième fréquence de coupure ($f_{g2}$) inférieure à la première fréquence de coupure ($f_{g1}$) et
- en vue de déterminer l'instant ($t_1$) servant de critère de départ pour le calcul de la durée (Timer), un premier compteur (Z1) est commandé en fonction de la différence entre le premier et le deuxième signal de vitesse de véhicule filtré passe-bas ($V_{ref\_fast}$, $V_{ref\_hard}$).

3. Procédé selon la revendication 2, **caractérisé en ce que**

- un troisième signal de vitesse de véhicule filtré passe-bas ($V_{ref\_soft}$) est généré par l'intermédiaire d'un filtre passe-bas (F3) ayant une troisième fréquence de coupure ($f_{g3}$) inférieure à la deuxième fréquence de coupure ($f_{g2}$) et

12

- en vue de déterminer l'instant servant de critère de départ pour le calcul de la durée, un deuxième compteur (Z2) est commandé en fonction de la différence entre le premier et le troisième signal de vitesse de véhicule filtré passe-bas ($V_{ref\_fast}$, $V_{ref\_soft}$).

4. Procédé selon la revendication 3, **caractérisé en ce que** le premier ou le deuxième compteur (Z1, Z2) est incrémenté dans le cas où la différence entre le premier et le deuxième ou le premier et le troisième signal de vitesse de véhicule filtré passe-bas ($V_{ref\_fast}$, $V_{ref\_hard}$, $V_{ref\_soft}$) devient supérieure à une première valeur de seuil ($SW_{o1}$) et remis à zéro dans le cas où elle devient inférieure à une deuxième valeur de seuil ($SW_{u1}$).

5. Procédé selon la revendication 4, **caractérisé en ce qu'**au début de la régulation de l'opération de freinage, le niveau de comptage du premier ou du deuxième compteur (Z1, Z2) dont la valeur est la plus élevée est utilisé comme durée (Timer).

6. Procédé selon la revendication 3 ou 4, **caractérisé en ce que** le ralentissement du véhicule est déterminé à partir des signaux des capteurs de vitesse de rotation de roue et comparé avec une valeur de seuil supérieure ($SW_{o2}$) et une valeur de seuil inférieure ($SW_{u2}$), et il existe un troisième compteur (Z3) qui est incrémenté lorsque le ralentissement du véhicule est supérieur à la valeur de seuil supérieure ($SW_{o2}$) et qui est remis à zéro lorsque le ralentissement du véhicule est inférieur à la valeur de seuil inférieure ($SW_{u2}$).

7. Procédé selon la revendication 6, **caractérisé en ce qu'**au début de la régulation de l'opération de freinage, deux niveaux de comptage ayant les valeurs les plus basses sont sélectionnés parmi les niveaux de comptage atteints par les premier, deuxième et troisième compteurs, la valeur moyenne des niveaux de comptage de ces deux compteurs étant utilisée comme valeur des temporisateurs variables.

8. Procédé selon l'une des revendications précédentes, **caractérisé en ce que** le modèle mathématique destiné à déterminer le modèle de pression d'admission ($P_{THZ\_mod}$) est une courbe caractéristique pression de freinage / ralentissement spécifique au véhicule mémorisée dans le système de freinage.

9. Procédé selon la revendication 8, **caractérisé en ce que** le modèle de pression d'admission ($P_{THZ\_mod}$) est déterminé à partir du ralentissement du véhicule automobile et de la courbe caractéristique pression de freinage / ralentissement lorsque la durée (Timer) présente au moins la valeur de la première valeur de premier seuil ($SW_1$, $SW_2$).

10. Procédé selon la revendication 9, **caractérisé en ce qu'**une estimation du coefficient de friction est effectuée et, en cas de détection d'une chaussée ayant un coefficient de friction élevé avec une valeur de ralentissement prédéfinie, un modèle de pression d'admission ($P_{THZ\_mod}$) est déterminé au moyen de la courbe caractéristique pression de freinage / ralentissement lorsque la durée (Timer) est inférieure à la première valeur de seuil ($SW_1$, $SW_2$).

11. Procédé selon les revendications 3 et 8, **caractérisé en ce que** le modèle de pression d'admission ($P_{THZ\_mod}$) est déterminé à partir du ralentissement du véhicule automobile et de la courbe caractéristique pression de freinage / ralentissement lorsque la valeur comptée ($Timer_{hard}$) du premier compteur (Z1) est supérieure ou égale à une première valeur de seuil ($SW_{1a}$) et la valeur comptée ($Timer_{soft}$) du deuxième compteur (Z2) est supérieure ou égale à une première valeur de seuil supplémentaire ($SW_{1b}$).

12. Procédé selon la revendication 11, **caractérisé en ce qu'**une estimation du coefficient de friction est effectuée et, en cas de détection d'une chaussée ayant un coefficient de friction élevé avec une valeur de ralentissement prédéfinie, un modèle de pression d'admission ($P_{THZ\_mod}$) est déterminé au moyen de la courbe caractéristique pression de freinage / ralentissement si au moins la valeur comptée ($Timer_{hard}$) du premier compteur (Z1) ou la valeur comptée ($Timer_{soft}$) du deuxième compteur (Z2) est inférieure à la première valeur de seuil ($SW_{1a}$) ou à la première valeur de seuil supplémentaire ($SW_{1b}$).

13. Procédé selon l'une des revendications 8 à 12, **caractérisé en ce que** le modèle mathématique destiné à déterminer le modèle de pression d'admission ($P_{THZ\_mod}$) est une courbe caractéristique gradient de pression THZ / coefficient de friction spécifique au véhicule mémorisée dans le système de freinage et

- le modèle de pression d'admission ($P_{THZ\_mod}$) est calculé sous la forme du produit du gradient de pression THZ (Grad), déterminé au moyen d'un coefficient de friction et de la courbe caractéristique gradient de pression THZ / coefficient de friction, par la valeur de la durée (Timer) dans le cas où il n'existe pas de coefficient de friction élevé et la valeur de la durée (Timer) est inférieure à une deuxième valeur de seuil ($SW_2$).

**14.** Procédé selon l'une des revendications 8 à 13, **caractérisé en ce que** le modèle mathématique destiné à déterminer le modèle de pression d'admission ($P_{THZ\_mod}$) est une courbe caractéristique gradient de pression THZ / coefficient de friction spécifique au véhicule mémorisée dans le système de freinage et

- le modèle de pression d'admission ($P_{THZ\_mod}$) est déterminé en tant que fonction d'estimation en fonction du gradient de pression THZ (Grad), déterminé au moyen d'un coefficient de friction et de la courbe caractéristique gradient de pression THZ / coefficient de friction, de la valeur de la durée (Timer) et de la valeur de la pression ($P_{max}$) déterminée au moyen du ralentissement du véhicule automobile et de la courbe caractéristique pression de freinage / ralentissement dans le cas où il n'existe pas de coefficient de friction élevé et la valeur de la durée (Timer) atteint la deuxième valeur de seuil ($SW_2$) et est inférieure à la première valeur de seuil ($SW_1$).

**15.** Procédé selon l'une des revendications 3 à 14, **caractérisé en ce qu'**un filtre passe-bas (F1, F2, F3), de préférence un filtre passe-bas de 1$^{er}$ ordre, est respectivement utilisé pour générer les premier, deuxième et troisième signaux de vitesse de véhicule filtrés passe-bas ($V_{ref\_fast}$, $V_{ref\_hard}$, $V_{ref\_soft}$).

**Fig. 1**

Fig. 2

Fig. 3

**Fig. 4**

Fig. 5

S6b — $P_{THZ\_mod}$

S6a — $P_{THZ\_mod}$

S12 — $P_{MAX}$

S11 — Niedirg-Anritt

$Timer_{Soft} \geq SW_{1a}$ UND $Timer_{Hard} \geq SW_{1b}$  — J / N

$Timer_{Soft}$

$Timer_{Hard}$

S22 — $k*P_{MAX}(1g)$

S21 — Hochreibwert

gesetzt ? — J / N

Hochreibwert — S5

S32 — $P = Grad * Timer$

S31 — Hart-Antritt

$0 < t < SW_2$ — J / N

Timer

S42 — $P = \left[ (25-Timer)*\dfrac{Grad}{Timer} +(Timer-10)*P_{Max} \right] * \dfrac{1}{15}$

S41 — mittlerer Antritt

$t \geq SW_2$

Fig. 6

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005007475 A1
- DE 102006056673 A1

- DE 102006022701 A1
- WO 9727090 A